# EUROPÄISCHE PATENTSCHRIFT

(11) **EP 0 421 407 B1**
(45) Veröffentlichungstag und Bekanntmachung des Hinweises auf die Patenterteilung: **13.07.1994**
(21) Anmeldenummer: 90119009.0
(22) Anmeldetag: 04.10.1990
(51) Int. Cl.: B60R 3/02

(54) **Heckeinstiegstritt für Kraftfahrzeuge**
Foot-step for automotive vehicles
Marchepied pour véhicules automobiles

(30) Priorität: 04.10.1989 DE 3933086
(43) Veröffentlichungstag der Anmeldung: 10.04.1991
(73) Patentinhaber: Spier GmbH & Co. Fahrzeugwerk KG, D-32839 Steinheim (DE)
(72) Erfinder: Hagedorn, Herbert, W-4934 Horn-Bad Meinberg (DE)
(74) Vertreter: Hanewinkel, Lorenz, Dipl.-Phys.

(56) Entgegenhaltungen:
- DE-A- 2 830 981
- US-A- 1 826 626
- US-A- 1 885 435
- US-A- 2 649 308
- US-A- 3 603 429

## Beschreibung

Die Erfindung bezieht sich auf einen Heckeinstiegstritt für Kraftfahrzeuge, mit einer unter dem Kraftfahrzeugchassis angeordneten, das Kraftfahrzeug nach hinten überragenden, querliegenden Trittplatte, die mittels am Kraftfahrzeugchassis befestigter Lenker um einen beschränkten Bereich im wesentlichen horizontal verschieblich gehalten ist, wobei die Trittplatte auf Tragarmen festgelegt ist, an denen die einen Enden der Lenker befestigt sind, und daß die Lenker sich vom Kraftfahrzeugchassis aus bis zur Befestigung an den Tragarmen nach unten erstrecken.

Aus der DE-A-2 830 981 ist ein derartiger Heckeinstiegstritt bekannt geworden. Hierbei sind die Lenker von in sich starren, einenends am Kraftfahrzeugchassis gelenkig gelagerten und anderenends die Tragarme gelenkig tragenden Hebelpaaren gebildet und zwischen einem Hebelpaar und dem Tragarm greifen Federn an, die den Heckeinstieg, entgegen der Fahrtrichtung unter Vorspannung halten und bei Belastung in Fahrtrichtung ein Zurückweichen des Heckeinstieges ermöglichen.

Diese federnde Lagerung des Heckeinstiegtrittes ist jedoch aufgrund der Schraubenfedern und fehlender Federführungen, die dadurch seitlich ausweichen können, bei größeren Belastungen labil und unzureichend.

Aufgabe der Erfindung ist es, einen nach der eingangs genannten Art aufgebauten Heckeinstiegstritt mit besonders gestalteten, die Trittplatte federnd und trittsicher führend und bei Belastungen in Kraftfahrzeug-Fahrtrichtung dauerhaft haltbar ausweichend tragenden Lenkern auszuführen.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte und förderliche Weiterbildungen der Aufgabenlösung darstellen.

Der Heckeinstiegstritt ist aus einer rutschfest ausgeführten Trittplatte, zwei diese tragenden Armen und mehreren die Arme unter Parellelverschwenkung unter dem Chassis lagernden Blattfedern gebildet, wobei diese Blattfedern als Aufhängung zwischen den Armen sich erstrecken und somit nach außen nicht wesentlich in Erscheinung treten, sondern lediglich die Trittplatte über das Chassis hinausragt.

Durch die Blattfedern wird einerseits eine leicht abgefederte Auftrittsfläche für die den Heckeinstiegstritt benutzende Person geschaffen und zum anderen kann die Trittplatte beim Zurücksetzen des Fahrzeuges und Anstoßen gegen ein Hindernis diesem Hindernis ausweichen, indem sie durch die Federn nach unten und in Richtung Chassis verschwenkt und dadurch eine Beschädigung der Trittplatte und deren Aufhängung vermieden wird. Die Blattfedern ermöglichen durch ihre Gestaltung eine dauerhaft haltbare Ausweichmöglichkeit der Trittplatte auch bei großen Belastungen.

Der Heckeinstiegstritt ist aus wenigen einfachen Einzelteilen einfach und kostengünstig herstellbar und aufgrund seiner Ausführung dauerhaft haltbar und in sich stabil.

Durch die besondere Formgebung und Anordnung der Blattfedern hat die Trittplatte eine trittsichere Führung erhalten, in dem diese beim Auftreten unter Beibehaltung ihrer waagerechten Lage nach unten und vorn verschwenkt, und die Blattfedern unterliegen sowohl beim Auftreten als auch bei der Rammschutzfunktion einer reinen Biegebelastung und -verformung; die Blattfedern erhalten eine progressive Federkennlinie und keine depressive Druckbelastung.

Auf den Zeichnungen ist ein Ausführungsbeispiel der Erfindung in Variationen dargestellt, welches nachfolgend näher erläutert wird.

Es zeigt:
- Fig. 1: eine Seitenansicht eines unter einem Fahrzeugchassis angeordneten Heckeinstiegstrittes,

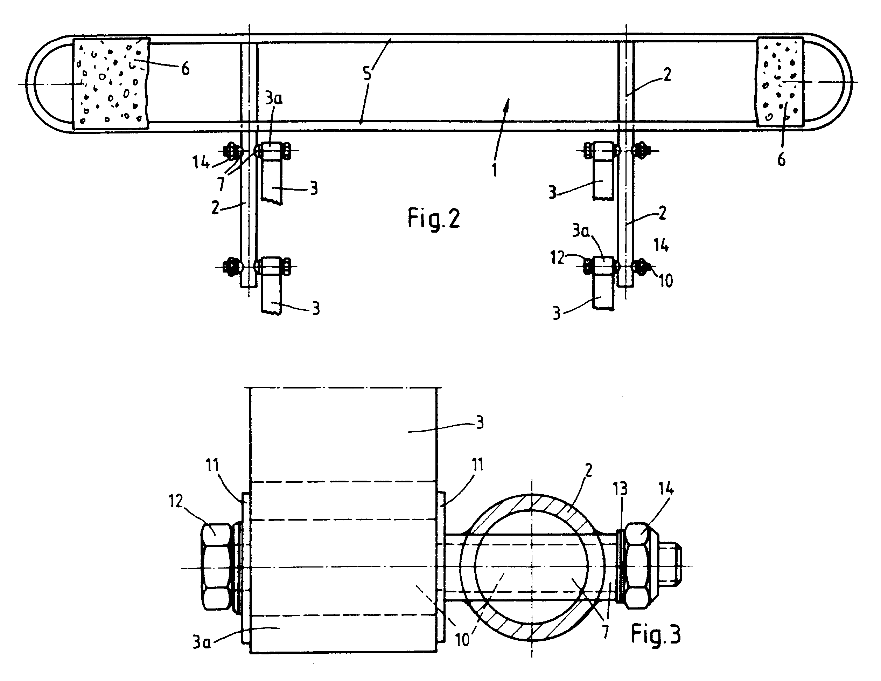

- Fig. 2: eine Draufsicht auf den Heckeinstiegstritt,
- Fig. 3: eine Rückansicht im teilweisen Schnitt eines Tragarmes und einer diesen schwenkbar haltenden Blattfeder des Heckeinstiegstrittes,
- Fig. 4: eine Seitenansicht des Heckeinstiegstrittes in weiterer Ausführung

Der Heckeinstiegstritt an/für Kraftfahrzeuge weist eine Trittplatte (1) auf, welche auf Tragarmen (2) befestigt ist, die an mehreren Blattfedern (3) am Chassis (4) des Kraftfahrzeuges nach unten und in Richtung Chassis (4) in einem begrenzten Bereich parallel verschwenkbar gelagert sind.

Die Trittplatte (1) ist auf den unter dem Kraftfahrzeugchassis (4) herausragenden Längenendbereich von zwei parallel verlaufenden, längsliegenden Tragarmen (2) durch Schweißen od. dgl. befestigt und jeder Tragarm (2) ist an zwei in Tragarm-Längsrichtung im Abstand hintereinander angeordneten Blattfedern (3) gelenkig gelagert, wobei sich diese insgesamt vier Blattfedern (3) an den einander zugewandten Innenseiten der beiden Tragarme (2) erstrecken.

Die Trittplatte (1) hat eine langgestreckte, an beiden Längenenden abgerundete Grundform und setzt sich aus einem endlos umlaufenden
Rohr (5) und einer darauf befestigten, vorzugsweise aufgeschweißten Lochplatte (6) zusammen, die sich mindestens nahezu über die gesamte Länge der Trittplatte (1) erstreckt und der Trittplatte (1) eine rutschfeste Auftrittsfläche gibt.

Die beiden Tragarme (2) sind von Rohren gebildet, welche rechtwinklig zur Längsrichtung der Trittplatte (1) verlaufen und für jede Blattfeder (3) eine die Tragarme (2) durchdringende, mit denselben durch Schweißen verbundene Lagerhülse (7) aufweist; die beiden Lagerhülsen (7) jedes Tragarmes (2) erstrecken sich rechtwinklig zur Tragarm-Längsrichtung und in Tragarm-Längsrichtung im Abstand hintereinander und hinter der Trittplatte (1).

Jede, in Streifenform ausgebildete Blattfeder (3) ist mit ihrem oberen Längenendbereich an einer Anlagewandung (8) des Chassis (4) durch Schrauben (9) befestigt und erstreckt sich nach unten über das Chassis (4) hinaus in einem Bogen, der in Richtung Trittplatte (1) verläuft. Für jede Blattfeder (3) ist durch die Lagerhülse (7) ein Schwenkzapfen (10) gesteckt, um den die bogenförmige Blattfeder (3) mit ihrem unteren Ende scharnierartig herumgebogen ist, so daß die Trittplatte (1) mit den Tragarmen (2) und ihrem Schwenkzapfen (10) in dem umgebogenen Scharnierende (3a) der Blattfeder (3) sich verdrehen kann.

Jede Blattfeder (3) liegt durch die Lagerhülse (7) im geringen Abstand zur Innenseite des Tragarmes (2) und zwischen zwei auf den Schwenkzapfen (10) aufgesteckte Anlagescheiben (11) und ist durch eine auf den Schwenkzapfen (10) aufgeschraubte Mutter (12) in Längsrichtung des Schwenkzapfens (10) gesichert.

Der Schwenkzapfen (10) wird mit seinem anderen Längeende unter Zwischenschaltung einer Anlagescheibe (13) durch eine Mutter (14) gegenüber der Lagerhülse (7) fixiert.

Die Anlagewandung (8) für jede streifenförmige Blattfeder (3) erstreckt sich auf einem Teilbereich ihrer Höhe senkrecht und im Anschluß an den Bogenbereich (3 b) der Blattfeder (3) als schräg und/oder bogenförmig nach unten und entgegen dem Blattfederbogen (3b) verlaufendes Wandungsteils (8a).

Die Blattfedern (3) sind in ihrer Federkraft derart stabil ausgeführt, daß beim Auftritt einer Person auf die Trittplatte (1) nur ein verhältnismäßig geringes Verschwenken der Trittplatte (1) mit den Tragarmen (2) in der Schwenkachse (10) in Pfeilrichtung "A" und somit entgegen der Federvorspannung erfolgt.

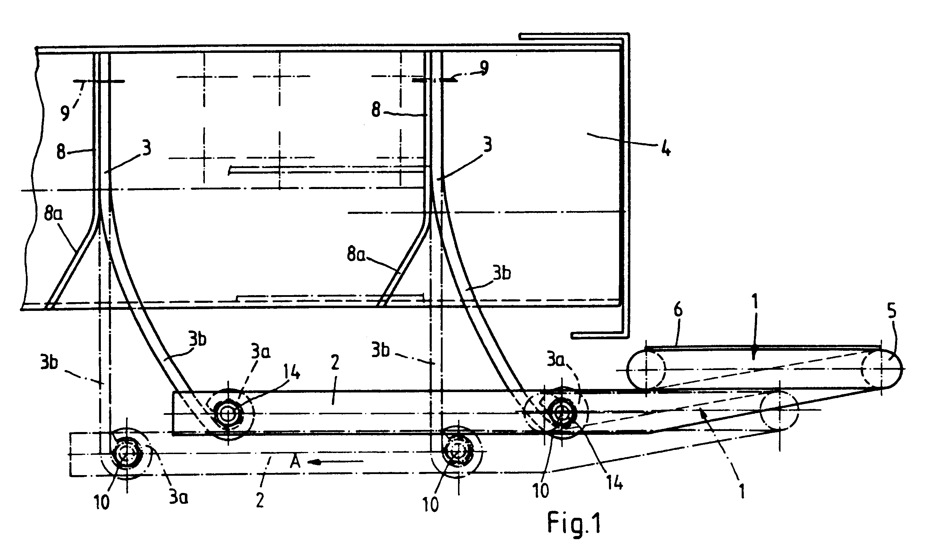

In Fig.1 ist die Parallelverschwenkung der Trittplatte (1) in strichpunktierten Linien in die senkrechte Stellung der Blattfedern (3) gezeigt.

Die federnde Aufhängung der Trittplatte (1) mit ihren Tragarmen (2) verhindert eine Beschädigung des Heckeinstiegstrittes beim Fahren des Kraftfahrzeuges (Zurücksetzen) gegen ein Hindernis, da dann der Heckeinstiegstritt nach unten und entgegen dieser Fahrtrichtung in Pfeilrichtung "A" verschwenken kann.

Die durch die Federbiegung und die entgegengesetzte Wandungsbiegung zunehmende Abstützung der Feder (3) gegen den Chassiswandungsteil (8a) bei einer, insbesondere in Fahrtrichtung wirkenden, Belastung des Heckeinstiegstrittes (1), also bei einem rückwärtigen Anstoßen an ein Hindernis oder bei einem Auffahren eines dahinter befindlichen Fahrzeuges, erbringt eine progressive Federkennlinie. Die Federn (3) machen also den Heckeinstieg zu einem Rammschutz für das Fahrzeugheck. Außerdem ist die relative stabile Hohlkörperkonstruktion des Heckeinstieges geeignet punktförmigen Stößen bis zu einem gewissen Grade zu widerstehen und dann energieverzehrend zu kollabieren. Dadurch wird das Chassis (4) geschont und ein Verzug desselben verhindert. Der Austausch des Heckeinstieges ist leicht zu bewerkstelligen. Auf diese Weise ist eine Doppelfunktion des Heckeinstiegs, nämlich als Einstieghilfe und als Rammschutz, erbracht.

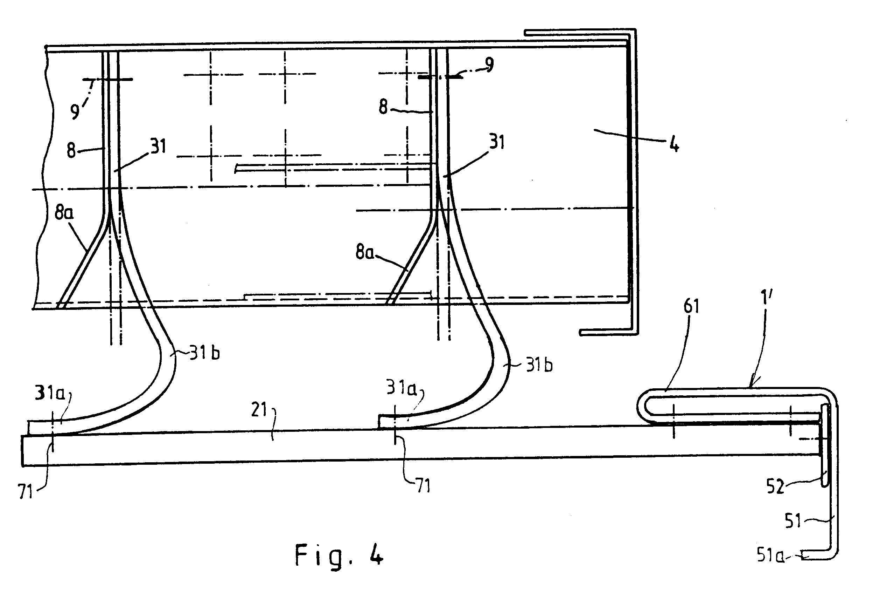

Eine weitere vorteilhafte Ausgestaltung des Heckeinstiegs zeigt Figur 4. Auch dort ist an dem Chassis (4) an zwei senkrechten, hintereinanderliegenden Stützwandungen (8) jeweils eine Blattfeder (31) befestigt, die sich in einem Bogen (31 b) nach hinten und unten erstrecken und dann nach vorn weitergebogen sind, wo sie mit ihrem horizontalen Federende (31a) an dem Tragarm (21) befestigt sind. Dieser erstreckt sich nach hinten über das Chassis (4) hinaus, wo auf ihm die Trittplatte (1 ) befestigt ist. Die senkrechte Stützwandung(8) ist an einem unteren Wandungsbereich (8a) entgegengesetzt zum Federbogen (31b) nach vorn gebogen, so daß eine progressive Federkennlinie gegeben ist.

Die flache Aufnietung (71) der Federenden (31a) auf dem Träger (21) vermeidet das Auftreten von extremen Knickungen der Blattfedern (31) bei einer Belastung. Deshalb können diese Federn (31) auch vorteilhaft aus faserverstärktem Kunststoff hergestellt sein.

Die Träger (21) und die Federpaare (31) sind paarweise beabstandet voneinander unter dem Chassis (4) montiert, und quer dazu ist an den Trägerenden die Trittplatte (1 ) befestigt. Diese ist durch eine Abkantung (51) nach unten zu einem Stoßfänger ergänzt, die auch untenseitig und seitlich weitere versteifende Abkantungen (51 a) nach hinten tragen. Der Auftritt (61) ist durch eine U-förmige Umbiegung versteift. Darüberhinaus sind die Enden der Träger (21) durch eine Stützplatte (52) gegen die Stoßfängerabkantung (51) verstärkt abgestützt. Diese Konstruktion zeichnet sich durch eine große Einfachheit in der Herstellung aus, da nur wenige punktförmige Verbindungen herzustellen sind. Gelenke sind nicht vorhanden.

## Patentansprüche

1. Heckeinstiegstritt für Kraftfahrzeuge, mit einer unter dem Kraftfahrzeugchassis (4) angeordneten, das Kraftfahrzeug nach hinten überragenden, querliegenden Trittplatte (1), die mittels am Kraftfahrzeugchassis (4) befestigter Lenker (3; 31) um einen beschränkten Bereich im wesentlichen horizontal verschieblich gehalten ist, wobei die Trittplatte (1; 1) auf Tragarmen (2; 21) festgelegt ist, an denen die einen Enden (3a; 31a) der Lenker (3; 31) befestigt sind, und daß die Lenker (3; 31) sich vom Kraftfahrzeugchassis (4) aus bis zur Befestigung an den Tragarmen (2; 21) nach unten erstrecken, dadurch gekennzeichnet, daß die Lenker (3; 31) von Blattfedern (3; 31) mit entgegen der Kraftfahrzeug-Fahrtrichtung und nach unten verlaufenden Bogenbereichen (3b; 31b) gebildet sind und durch diese Bogenbereiche (3b; 31b) bei einer in Kraftfahrzeug-Fahrtrichtung auf den Heckeinstieg wirkenden Belastung mit zunehmender Abstützung gegen eine Chassis-Anlagewandung (8; 8a) eine progressive Federkennlinie haben.

2. Heckeinstiegstritt nach Anspruch 1, dadurch gekennzeichnet, daß die Trittplatte (1; 1) auf mindestens zwei unter dem Kraftfahrzeugchassis (4) herausragenden, längsliegenden Tragarmen (2; 21) befestigt ist, die jeweils an mindestens zwei in Tragarmlängsrichtung hintereinander geordneten Blattfedern (3; 31) am Chassis (4) gehalten sind.

3. Heckeinstiegstritt nach Anspruch 1 oder 2, dadurch gekennzeichnet, daß die Blattfedern (3; 31) jeweils an senkrechten Chassis-Anlagewandungen (8) des Kraftfahrzeuges befestigt sind und von diesen jeweils nach hinten abhebend in einem Bogenbereich (3b; 31b) verlaufen und/oder jede Chassis-Anlagewandung (8) von oben nach unten von der jeweiligen Blattfeder (3; 31) weggebogen verläuft.

4. Heckeinstiegstritt nach einem der Ansprüche 1 bis 3, dadurch gekennzeichnet, daß die beiden Tragsarme (2) von rechtwinklig zur Längsrichtung der Trittplatte (1) im parallelen Abstand zueinander verlaufenden Rohren gebildet sind und für jede Blattfeder (3) eine die Tragarme (2) durchdringende, mit denselben durch Schweißen verbundene und rechtwinklig zur Tragarm-Längsrichtung stehende Lagerhülse (7) aufweisen, die in Tragarm-Längsrichtung im Abstand hintereinander und hinter der Trittplatte (1) liegen und beidseitig aus jedem Tragarm (2) herausragen.

5. Heckeinstiegstritt nach einem der Ansprüche 1 bis 4, dadurch gekennzeichnet, daß jede Blattfeder (3) mit ihrem unteren umgebogenen Scharnierende (3a) um einen die Lagerhülse (7) durchgreifenden Schwenkzapfen (10) an der Innenseite jedes Tragarmes (2) durch zwei Anlagescheiben (11) und eine aufgeschraubte Mutter (12) lagefixiert und der Schwenkzapfen (10) mit seinem anderen Ende durch eine Anlagescheibe (13) und eine aufgeschraubte Mutter (14) gegenüber der Lagerhülse (7) arretiert ist.

6. Heckeinstiegstritt nach einem der Ansprüche 1 bis 5, dadurch gekennzeichnet, daß die Anlagewandung (8) des Kraftfahrzeugchassis (4) für jede Blattfeder (3) einen senkrecht verlaufenden Höhenbereich hat, an dem die Blattfeder (3) durch Schrauben (9) oder dgl. befestigt ist und im Bogenbereich (3b) der Blattfeder (3) ein entgegen dem Blattfederbogen (3b) verlaufendes, abgeschrägtes oder bogenförmiges Wandungsteil (8a) aufweist.

7. Heckeinstiegstritt nach einem der Ansprüche 1 bis 6, dadurch gekennzeichnet, daß die Trittplatte (1) eine langgestreckte, an beiden Enden abgerundete Grundform hat und aus einem endlos umlaufenden Rohr (5) und einer darauf durch Schweißen oder dgl. befestigten, rutschfesten Lochplatte (6) gebildet ist.

8. Heckeinstiegstritt nach einem der Ansprüche 1 bis 3 und 7, dadurch gekennzeichnet, daß die Blattfedern (31) jeweils am unteren Ende (31a) horizontal gebogen verlaufen und mit dem horizontalen Endbereich (31a) auf dem Tragarm (21) befestigt sind.

9. Heckeinstiegstritt nach einem der Ansprüche 1 bis 6 und 8, dadurch gekennzeichnet, daß die Trittplatte (1 ) rückseitig eine Stoßfängerabkantung (51) aufweist.

10. Heckeinstiegstritt nach Anspruch 9, dadurch gekennzeichnet daß die Trittplatte (1 ) nach unten U-förmig gebogen ist und dieser Abbiegung an den Tragarmen (21) befestigt ist.

11. Heckeinstiegstritt nach Anspruch 10, dadurch gekennzeichnet, daß die Stoßfängerabkantung (51) unten und/oder seitlich nach vorn gerichtete Versteifungsabkantungen (51a) aufweist.

12. Heckeinstiegstritt nach einem der Ansprüche 9 bis 11, dadurch gekennzeichnet, daß endseitig der Tragarme (21) eine Stütze (52) befestigt ist, die die Stoßfängerabkantung (51) hintenliegend unterstützt.

## Claims

1. Rear step for boarding motor vehicles, comprising a transverse step plate (1) which is disposed underneath the motor vehicle chassis (4) and projects rearwards past the motor vehicle, and which by means of suspension links (3; 31) fastened to the motor vehicle chassis (4) is held so as to be displaceable substantially horizontally by a limited range, the step plate (1; 1) being set on supporting brackets (2; 21) to which the first ends (3a; 31a) of the suspension links (3; 31) are fastened, and the suspension links (3; 31) extending down out of the motor vehicle chassis (4) as far as the fixing to the supporting brackets (2; 21),
characterised in that the suspension links (3; 31) are formed by leaf springs (3; 31) with curved regions (3b; 31b) running in the direction opposite the vehicle's direction and travel and downwards, and, for a load acting on the tail in the vehicle's direction of travel, these curved regions (3b; 31b) give the suspension links a progressive load-deflection characteristic as they bear increasingly against a chassis contact panel (8; 8a).

2. Rear boarding step according to claim 1,
characterised in that the step plate (1; 1) is fastened on at least two lengthways supporting brackets (2; 21) which project out from under the motor vehicle chassis (4) and are each held on the chassis (4) on not less than two leaf springs (3; 31) arranged one behind the another in the longitudinal direction of the supporting brackets.

3. Rear boarding step according to claim 1 or 2, characterised in that the leaf springs (3; 31) are each fastened to vertical chassis contact panels (8) of the motor vehicle and from these panels they run rearwards in each case, lifting away in a curved region (3b; 31b), and/or each chassis contact panel (8) curves from top to bottom away from the respective leaf spring (3; 31).

4. Rear boarding step according to any of claims 1 to 3, characterised in that the two supporting brackets (2) are constituted by parallel spaced tubes running at right angles to the longitudinal direction of the step plate (1), and that for each leaf spring (3) they incorporate a bearing sleeve (7) which passes through the supporting brackets (2), is joined to the same by welding, and runs at a right angle to the longitudinal direction of the supporting bracket, and that said bearing sleeves (7) are spaced one behind the other and behind the step plate (1) in the longitudinal direction of the supporting brackets and jut out on both sides from each supporting bracket (2).

5. Rear boarding step according to any of claims 1 to 4, characterised in that on the inside of each supporting bracket (2), each leaf spring (3) is fixed in position by two contact washers (11) and a screwed-on nut (12), with its lower bent hinge end (3a) around a swivel pin (10) which passes through the bearing sleeve (7), and the other end of the swivel pin (10) is locked in position relative to the bearing sleeve (7) by a contact washer (13) and a screwed-on nut (14).

6. Rear boarding step according to any of claims 1 to 5, characterised in that for each leaf spring (3) the contact panel (8) of the motor vehicle chassis (4) has a vertical portion to which the leaf spring (3) is fastened by screws (9) or the like, and in the curved region (3b) of the leaf spring (3) incorporates a slanted or curved panel area (8a) which runs in the opposite direction to the leaf-spring curve (3b).

7. Rear boarding step according to any of claims 1 to 6, characterised in that the step plate (1) has an elongated basic shape, rounded off at both ends, and is formed from a continuous loop of tubing (5) and a non-slip, perforated plate (6) secured to it by welding or the like.

8. Rear boarding step according to any of claims 1 to 3 and 7, characterised in that the leaf springs (31) are each horizontally bent at the lower end (31a) and are fastened on the supporting bracket (21) by the horizontal end section (31a).

9. Rear boarding step according to any of claims 1 to 6 and 8, characterised in that the back of the step plate (1) incorporates a bumper bar (51).

10. Rear boarding step according to claim 9, characterised in that the step plate (1) is bent downwards in a U-shape and is fastened to the supporting brackets (21) by said bent section.

11. Rear boarding step according to claim 10, characterised in that the bumper bar (51) incorporates forward-directed strengthening bars (51a) at the bottom and/or sides.

12. Rear boarding step according to any of claims 9 to 11, characterised in that a bracket (52) is attached at the ends of the supporting brackets (21) and supports the bumper bar (51) at the back.

## Revendications

1. Marchepied arrière pour véhicules automobiles avec un plateau (1) disposé transversalement sous le châssis (4) du véhicule et faisant saillie à l'arrière de celui-ci, lequel plateau (1) est maintenu, déplaçable essentiellement dans le sens horizontal, dans une plage limitée, par les guides (3; 31) fixés au châssis (4) du véhicule, le plateau (1; 1) étant fixé sur des bras supports (2; 21), auxquels les guides (3; 31) sont rattachés, d'un côté, par leurs extrémités (3a; 31a) et les guides (3; 31) descendant du châssis (4) du véhicule jusqu'aux fixations aux bras supports (2; 21),
caractérisé en ce que
les guides (3; 31) sont formés par des ressorts à lames (3; 31) avec des zones arquées (3b; 31b) qui s'étendent vers le bas, dans la direction opposée au sens de marche du véhicule et leur confèrent une courbe caractéristique progressive en cas de charge agissant sur le marchepied arrière dans le sens de marche du véhicule avec appui croissant contre la paroi de contact (8; 8a) du châssis.

2. Marchepied arrière selon la revendication 1,
caractérsié en ce que
le plateau (1) est fixé sur au moins deux bras supports (2; 21) disposés longitudinalement et faisant saillie de dessous le châssis (4) du véhicule, les bras supports (2; 21) étant maintenus chacun au châssis (4) du véhicule avec, au moins, deux ressorts à lames (3; 31) disposés l'un derrière l'autre dans le sens longitudinal des bras supports.

3. Marchepied arrière selon la revendication 1 ou 2,
caractérisé en ce que
les ressorts à lames (3; 31) sont fixés respectivement aux parois de contact verticales (8) du châssis du véhicule automobile et s'étendent, respectivement, à partir de celles-ci, sous forme de zone arquée (3b; 31b) se relevant en arrière et/ou que chaque paroi de contact (8) du châssis s'étend, du haut vers le bas et s'écarte du ressort à lames (3; 31) respectif en se courbant.

4. Marchepied arrière selon l'une des revendications 1 à 3,
caractérisé en ce que les deux bras supports (2) sont formés par des tubes qui s'étendeant, parallèlement à intervalle l'un à l'autre, à angle droit par rapport au sens longitudinal du plateau (1), et présentent, pour chaque ressort à lames (3) une douille de palier (7), disposée à angle droit par rapport au sens longitudinal du bras support, laquelle traverse les bras supports (2) auxquels elle est reliée par soudure, ces douilles étant disposées, à intervalle, l'une derrière l'autre et derrière le plateaudécrottoir (1) et faisant saillie hors de chaque bras support (2).

5. Marchepied arrière selon l'une des revendication 1 à 4,
caractérisé en ce que
chaque ressort à lames (3) est positionnée, par son extrémité de charnière inférieure, courbée (3a), autour d'un pivot (10) traversant la douille de palier (7), sur la face intérieure de chaque bras support (2; 21), par deux rondelles d'appui (11) et un écrou (12) vissé, et que le pivot (10), à son autre extrémité, est bloqué par rapport à la douille palier (7) par une rondelle d'appui (13) et un écrou (14) vissé.

6. Marchepied arrière selon l'une des revendications 1 à 5,
caractérisé en ce que
la paroi de contact (8) du châssis (4) du véhicule automobile comprend, pour chaque ressort à lames (3), une zone verticale, dans laquelle les ressorts à lames (3) sont fixés à l'aide de vis (9) ou autres fixations analogues, et présente, dans la zone arquée (3b) des ressorts à lames (3), une partie chanfreinée ou courbée (8a) qui s'écarte de la zone arquée (3b).

7. Marchepied arrière selon l'une des revendications 1 à 6,
caractérisé en ce que
le plateau (1) est de forme allongée, arrondie aux deux extrémités et consiste en un tube sans fin (5), sur lequel une plaque perforée, antidérapante (6) est soudée ou fixée de façon analogue.

8. Marchepied arrière selon l'une des revendications 1 à 3 et 7,
caractérisé en ce que
les ressorts à lames (31) s'étendent horizontalement, étant arqués à leur extrémité inférieure (31a) et sont fixés sur le bras support (21) par leur zone d'extrémité horizontale (31a).

9. Marchepied arrière selon l'une des revendications 1 à 6 et 8,
caractérisé en ce que
le plateau (1) présente, à l'arrière, un bord plié pare-chocs (51).

10. Marchepied arrière selon la revendication 9
caractérisé en ce que
le plateau (1) est plié vers le bas en U et que cette partie pliée est fixée aux bras supports (21).

11. Marchepied arrière selon la revendication 10,
caractérisé en ce que
le bord plié pare-chocs (51) est pourvu, en bas et/ou latéralement, des raidissements (51a) dirigés en avant.

12. Marchepied arrière selon l'une des revendications 9 à 11,
caractérisé en ce que
un appui (52) est fixé aux extrémités des bras supports (21), lequel appui (52) soutient le bord plié pare-chocs (51) à l'arrière.
